# DEMANDE DE BREVET EUROPEEN

(11) **EP 4 280 181 A1**
(43) Date de publication de la demande: **22.11.2023**
(21) Numéro de dépôt: 23173970.7
(22) Date de dépôt: 17.05.2023
(51) Int. Cl.: G07C 9/00, G01S 15/02, G06Q 30/00, G01S 7/521

(54) **SYSTÈME DE COMPTAGE ET PROCÉDÉ DE COMPTAGE POUR COMPTEUR DE PASSAGE**

(30) Priorité: 17.05.2022 FR 2204675
(71) Demandeur: Dymension, 69007 Lyon (FR)
(72) Inventeur: TREBUIL, Loic, 69004 LYON (FR); COIFFIER, Arnaud, 69480 ANSE (FR); De BRABOIS, Xavier, 69300 CALUIRE ET CUIRE (FR)
(74) Mandataire: Germain Maureau

(57) **Abrégé**

Procédé de comptage et de détermination d'une direction de passage comprenant au moins les étapes suivantes :
- Premières mesures relevée par un premier capteurs à ultrason et un deuxième capteur à ultrason, définissant respectivement une première zone de détection (13) et une deuxième zone de détection (14),
- détermination d'une valeur d'un premier état de détection combiné en fonction des mesures :
∘ Présence dans la première zone de détection ;
∘ Présence dans la deuxième zone de détection ;

- détermination d'une valeur d'un deuxième état de détection combiné prenant les mêmes valeurs que le premier état de détection combiné.
- comptage d'une personne et détermination de la direction de la personne dans une première direction de passage, ou
- comptage d'une personne et détermination de la direction de la personne dans une deuxième direction de passage.

## Description

### Domaine technique

L'invention concerne un système de comptage, permettant de mesurer le passage de personnes dans une zone spécifique et de façon autonome.

L'invention trouve une application favorite, et non limitative, dans la mesure statistique ou informative de la fréquentation d'une zone ou d'un établissement tel qu'un magasin ou des sanitaires par exemple. Des applications sont envisageables dans le domaine du commerce ou du marketing, de l'entretien, mais également dans le domaine du divertissement, dans les établissements privés ou publiques, en intérieur.

En effet, le comptage autonome et automatisé d'un flux de personne permet par exemple d'obtenir les données statistiques nécessaires à une optimisation de l'accueil de visiteurs dans un établissement, un centre commercial ou un magasin, ou à l'augmentation de la fréquence de l'entretien par exemple. Le Comptage autonome et automatisé d'un flux de personne permet ainsi d'éviter l'encombrement, la saturation ou la dégradation d'un espace visant à accueillir une ou plusieurs personnes, l'encombrement ou la saturation d'un espace étant généralement une expérience néfaste pour un visiteur.

### Etat de la technique

Il est ainsi connu de l'art antérieur d'employer un dispositif de comptage comprenant des composants électroniques disposés dans un boitier et configuré pour détecter le passage d'une personne à proximité du dispositif de comptage, ces composants électroniques comprennent un ou plusieurs éléments de mesure à ultrason ainsi qu'un capteur de proximité.

Ce type de dispositif de comptage est particulièrement performant car il permet d'effectuer simplement un comptage lorsqu'une personne entre dans une zone de détection de l'un des éléments de mesure à ultrason. Cependant, un tel dispositif présente des inconvénients majeurs, le premier étant l'impossibilité de définir la direction dans laquelle se déplace la personne, il est alors impossible de savoir si une personne rentre ou sort d'un bâtiment ou d'une zone délimitée par exemple, et donc le compteur va nécessairement comptabiliser deux fois une personne qui passe une première fois puis revient devant le compteur, provoquant des erreurs de comptage conséquentes.

### Résumé de l'invention

Le problème technique à la base de l'invention consiste donc à fournir un procédé de comptage et de détermination d'une direction de passage dont la mise en oeuvre soit simple, économique, déplaçable entre plusieurs positions, autonome en énergie, et qui soit conformé pour compter le passage d'au moins une personne et d'en déterminer les directions possibles.

A cet effet, la présente invention concerne un procédé de comptage et de détermination d'une direction de passage utilisant un premier capteur à ultrason et un deuxième capteur à ultrason définissant un périmètre de détection, les premier et deuxième capteurs à ultrason définissant respectivement une première zone de détection et une deuxième zone de détection, le procédé comprenant au moins les étapes suivantes :
- première mesure relevée par le premier capteur à ultrason et première mesure relevée par le deuxième capteur à ultrason, les premières mesures définissant un premier groupe de mesure,
- première détermination d'une valeur d'un premier état de détection combiné en fonction de la première mesure relevée par le premier capteur à ultrason et de la première mesure relevée par le deuxième capteur à ultrason,
- deuxième mesure relevée par le premier capteur à ultrason et deuxième mesure relevée par le deuxième capteur à ultrason, les deuxièmes mesures définissant un deuxième groupe de mesure,
- deuxième détermination d'une valeur d'un deuxième état de détection combiné en fonction de la deuxième mesure relevée par le premier capteur à ultrason et de la deuxième mesure relevée par le deuxième capteur à ultrason,
- les valeurs prises par le premier état de détection combiné ou par le deuxième état de détection combiné étant comprises dans un ensemble de valeur d'état comprenant les valeurs suivantes :
   ∘ présence dans la première zone de détection;
   ∘ présence dans la deuxième zone de détection;
   ∘ comptage et détermination de la direction d'une personne dans lequel :
- une incrémentation d'un compteur de passage est réalisée, et une direction de passage est déterminée dans une première direction de passage si le premier état de détection combiné correspond à une présence dans la première zone de détection et le deuxième état de détection combiné correspond à une présence dans la deuxième zone de détection, ou
- une incrémentation d'un compteur de passage est réalisée, et une direction de passage est déterminée dans une deuxième direction de passage si le premier état de détection combiné correspond à une présence dans la deuxième zone de détection et le deuxième état de détection combiné correspond à une présence dans la première zone de détection.

Le procédé de comptage et de détermination d'une direction de passage peut en outre présenter une ou plusieurs des caractéristiques suivantes, qui peuvent être prises seules ou en combinaison.

Selon un mode de réalisation de l'invention, l'ensemble de valeurs d'état comprend en outre la valeur suivante : présence dans une zone de détection commune ; et dans lequel l'étape de comptage et de détermination de la direction d'une personne comprend :
- l'incrémentation du compteur de passage, et la détermination de la direction de passage dans la première direction de passage si le premier état de détection combiné correspond à une présence dans la zone de détection commune et le deuxième état de détection combiné correspond à une présence dans la deuxième zone de détection, ou
- l'incrémentation du compteur de passage, et la détermination de la direction de passage dans la première direction de passage si le premier état de détection combiné correspond à une présence dans la première zone de détection et le deuxième état de détection combiné correspond à une présence dans la zone de détection commune, ou
- l'incrémentation du compteur de passage, et la détermination de la direction de passage dans la deuxième direction de passage si le premier état de détection combiné correspond à une présence dans la zone de détection commune et le deuxième état de détection combiné correspond à une présence dans la première zone de détection, ou
- l'incrémentation du compteur de passage, et la détermination de la direction de passage dans la deuxième direction de passage si le premier état de détection combiné correspond à une présence dans la deuxième zone de détection et le deuxième état de détection combiné correspond à une présence dans la zone de détection commune.

Selon un mode de réalisation de l'invention, l'ensemble de valeurs d'état comprend en outre les valeurs suivantes : non présence ou aucune mesure notable, et présence proche ; et dans lequel l'étape de comptage et de détermination de la direction d'une personne comprend :
- l'incrémentation du compteur de passage, et la détermination de la direction de passage dans une direction de passage inconnue si le premier état de détection combiné correspond à une présence dans la première zone de détection et le deuxième état de détection combiné correspond à une non-présence, ou
- l'incrémentation du compteur de passage, et la détermination de la direction de passage dans une direction de passage inconnue si le premier état de détection combiné correspond à une présence dans la deuxième zone de détection et le deuxième état de détection combiné correspond à une non-présence, ou
- l'incrémentation du compteur de passage, et la détermination de la direction de passage dans une direction de passage inconnue si le premier état de détection combiné correspond à une présence dans la zone de détection commune et le deuxième état de détection combiné correspond à une non-présence, ou
- l'incrémentation du compteur de passage, et la détermination de la direction de passage dans une direction vers le dispositif de mesure si le premier état de détection combiné correspond à une présence proche.

Selon un mode de réalisation de l'invention, le procédé de comptage et de détermination d'une direction de passage comprend également les étapes suivantes, successivement à la fin de l'étape de comptage et de détermination de la direction d'une personne :
- temporisation d'une durée d'une seconde après le comptage et la détermination de la direction de la personne afin que la personne puisse quitter le périmètre de détection,
- reprise de l'étape première mesure relevée par le premier capteur à ultrason et de la première mesure relevée par le deuxième capteur à ultrason,
- première détermination d'une valeur du premier état de détection combiné en fonction des premières mesures relevées par le premier et le deuxième capteurs à ultrason, si les mesures relevées sont différentes des dernières mesures enregistrées.

Selon un mode de réalisation de l'invention, les mesures du deuxième groupe de mesures sont répétées pendant une durée déterminée, ou jusqu'à ce que le deuxième groupe de mesures aboutisse à une deuxième détermination qui soit différente de la première détermination.

Selon un mode de réalisation de l'invention, la durée une valeur arbitrairement décidée en fonction de l'afflux, et est de 30 secondes par exemple.

Selon un mode de réalisation de l'invention, les mesures du premier groupe de mesures sont répétées pendant une durée déterminée, ou jusqu'à ce que les mesures du premier groupe de mesures diffèrent des valeurs obtenues dans l'étape de calibration.

Selon un mode de réalisation de l'invention, le procédé de comptage et de détermination d'une direction de passage comprend également les étapes suivantes, préalablement à l'étape de première mesure : mise en fonction des premier et deuxième capteurs à ultrason par activation d'un détecteur de présence, et la calibration quotidienne des premier et deuxième capteurs à ultrason.

Selon un mode de réalisation de l'invention, le procédé de comptage et de détermination d'une direction de passage comprend l'étape suivante : comptage d'une personne additionnelle et détermination de la direction de la personne additionnelle dans une première direction de passage, une deuxième direction de passage ou dans une direction de passage inconnue si une personne est immobile dans une premier état de détection quelconque, le comptage d'une personne additionnelle passant par la définition d'un premier état de détection additionnel et d'un deuxième état de détection additionnel.

Selon un mode de réalisation de l'invention, le procédé de comptage et de détermination d'une direction de passage comprend en outre l'étape suivante, en tant que dernière étape du procédé : mise en veille du système de comptage si aucun des premier et deuxième capteurs à ultrason ne détectent de présence dans l'une quelconque des zones de détection pendant une durée choisie arbitrairement en fonction du flux de passage, et par exemple compris entre 20 secondes et 40 secondes.

Selon un mode de réalisation de l'invention, le procédé de comptage et de détermination d'une direction de passage comprend l'étape suivante, préalable à l'étape de mesure : calibration des premier et deuxième capteurs à ultrason, la calibration consistant en la mesure de la distance maximale mesurée par chacun des premier et deuxièmes capteurs à ultrason.

Selon un mode de réalisation de l'invention, la présence d'une personne dans l'une quelconque des zones de détection est caractérisée par une distance mesurée par au moins l'un des premier et deuxième capteurs à ultrason, ladite distance mesurée devant être au moins 10% inférieure à la distance maximale mesurée respectivement par les premier et deuxième capteurs à ultrason durant l'étape de calibration.

Selon un mode de réalisation de l'invention, le procédé de comptage et de détermination d'une direction de passage est caractérisé en ce que les premier et deuxième capteurs à ultrason effectuent chacun sensiblement 5 mesures par seconde.

Selon un mode de réalisation de l'invention les premier et deuxième capteurs à ultrason effectuent chacun sensiblement trois mesures par cycle de 50 ms, soit 60 mesures par seconde.

Selon un mode de réalisation de l'invention, les cycles de mesure des premier et deuxième capteurs à ultrason sont réalisés successivement, c'est-à-dire l'un après l'autre, afin de ne pas se gêner mutuellement.

L'invention porte en outre sur un système de comptage configuré pour la mise en oeuvre du procédé de comptage et de détermination d'une direction de passage, le système de comptage comportant au moins un premier capteur à ultrason et un deuxième capteur à ultrason définissant le périmètre de détection, une unité de commande configurée pour déterminer le nombre de personnes passant dans le périmètre de détection en fonction des signaux de détection émis par les premier et deuxième capteurs à ultrason et pour détecter le sens de passage des personnes dans le périmètre de détection ;le premier capteur à ultrason possédant un premier axe de détection, et le deuxième capteur à ultrason possédant un deuxième axe de détection qui est incliné par rapport au premier axe de détection.

Selon un mode de réalisation de l'invention, les premier et deuxième axes de détection sont inclinés l'un par rapport à l'autre d'un angle d'inclinaison compris entre 15 et 25°, et par exemple d'environ 20°.

Selon un mode de réalisation de l'invention, les premier et deuxième capteurs à ultrason sont espacés l'un par rapport à l'autre d'une distance comprise entre 4 et 12 cm, et par exemple d'environ 8 cm.

Selon un mode de réalisation de l'invention, la première zone de détection et la deuxième zone de détection se superposent au moins en partie et définissent une zone de détection commune.

Selon un mode de réalisation de l'invention, le système de comptage comporte en outre un boitier qui comprend une partie de socle et une partie de comptage.

Selon un mode de réalisation de l'invention, la partie de socle est destinée à reposer sur une surface de sol.

Selon un mode de réalisation de l'invention, la partie de socle est configurée pour être fixée sur un mur ou un élément s'élevant sensiblement verticalement.

Selon un mode de réalisation de l'invention, le deuxième axe de détection est sécant avec le premier axe de détection

Selon un mode de réalisation de l'invention, la zone de détection commune est prévue à une distance de la partie de comptage qui est comprise entre 50 cm et 100 cm, et par exemple d'environ 73 cm, selon le plan de détection.

Selon un mode de réalisation de l'invention, le système de comptage comporte en outre un détecteur de présence configuré pour agir sur l'alimentation électrique des premier et deuxième capteurs à ultrason.

Selon un mode de réalisation de l'invention, le détecteur de présence comporte un faisceau de détection s'étendant sensiblement à 180° autour d'une partie avant du détecteur de présence.

Selon un mode de réalisation de l'invention, la portée de détection du détecteur de présence est comprise entre 2 mètres et 6 mètres, et avantageusement entre 3 et 5 mètres.

Selon un mode de réalisation de l'invention, le détecteur de présence est configuré pour faire saillie avec une face avant du système de comptage.

Avantageusement, la mise en saillie du détecteur de présence permet de maximiser le faisceau de détection du détecteur de présence.

Selon un mode de réalisation de l'invention, le premier capteur à ultrason et le deuxième capteur à ultrason comportent chacun une partie active, également appelée canon, laquelle est configurée pour être dirigée en direction respectivement du premier axe de détection et du deuxième axe de détection.

Selon un mode de réalisation de l'invention, le premier capteur à ultrason et le deuxième capteur à ultrason sont chacun inséré à l'intérieur d'un dispositif d'isolement s'étendant sensiblement respectivement selon le premier axe de détection et le deuxième axe de détection, la partie active étant espacé du dispositif d'isolement.

Selon un mode de réalisation de l'invention, le dispositif d'isolement est un tube à section sensiblement cylindrique.

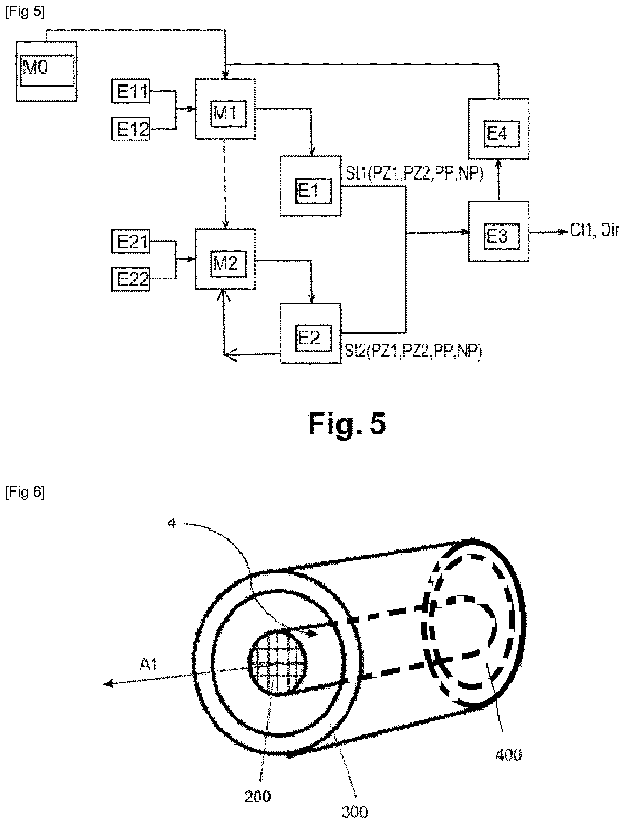

Selon un mode de réalisation de l'invention visible plus spécifiquement sur la figure 6, le premier capteur à ultrason et le deuxième capteur à ultrason comportent chacun une partie de support, laquelle est configurée pour solidariser le premier capteur à ultrason et le deuxième capteur à ultrason à l'intérieur des dispositifs d'isolement respectifs, la partie de support étant prévue à l'opposé de la partie active respectivement selon le premier axe de détection et le deuxième axe de détection.

Une telle configuration de l'invention permet avantageusement d'isoler la partie active du premier capteur à ultrason et du deuxième capteur à ultrason des parties de support respectives. Ainsi, un espace vide est créé entre la partie active le dispositif d'isolement. Ceci permet avantageusement d'éviter les phénomènes de résonnance générés par le contact de la partie active avec un élément extérieur.

Selon un mode de réalisation de l'invention, le système de comptage est transportable par l'utilisateur, c'est-à-dire qu'il peut être déplacé par un utilisateur.

Selon un mode de réalisation de l'invention, le système de comptage comporte en outre un dispositif de récolte d'information qui est commandé par l'unité de commande et qui est configuré pour attirer l'attention d'un individu passant à proximité du système de comptage.

Selon un mode de réalisation de l'invention, le système de comptage comporte un dispositif d'interaction configuré pour interagir avec un individu.

Selon un mode de réalisation de l'invention, le dispositif d'interaction peut être une interface de sondage par exemple.

Selon un mode de réalisation de l'invention, le système de comptage comporte en outre un dispositif d'alimentation électrique, telle qu'une batterie par exemple, le dispositif d'alimentation électrique étant prévue dans la partie de socle par exemple.

Selon un mode de réalisation de l'invention, le dispositif d'alimentation électrique est configuré pour alimenter électriquement le système de comptage.

Selon un mode de réalisation de l'invention, le système de comptage comporte un dispositif de communication configuré pour exporter les données générées par le procédé de comptage.

Selon un mode de réalisation de l'invention, le dispositif de communication est un dispositif de communication non filaire, tel qu'une clé réseau ou une clé 4G par exemple.

### Brève description des figures

La présente invention sera bien comprise à l'aide de la description qui suit en référence aux figures annexées, dans lesquelles des signes de références identiques correspondent à des éléments structurellement et/ou fonctionnellement identiques ou similaires.
[Fig 1] est une vue en perspective de côté d'un système de comptage selon un mode de réalisation de l'invention ;
[Fig 2] est une vue schématique de dessus d'un système de comptage ainsi que des zones de détection selon le mode de réalisation ;
[Fig 3] est une vue schématique de dessus d'un système de comptage lors du passage d'un ou plusieurs personnes ;
[Fig 4] est une vue schématique de dessus d'un système de comptage lors du passage d'un ou plusieurs personnes ;
[Fig 5] est un logigramme du procédé de comptage et de détermination d'une direction selon le mode de réalisation de l'invention ;
[Fig 6] est une vue schématique de la partie active d'un capteur à ultrason selon le mode de réalisation de l'invention.

### Description détaillée

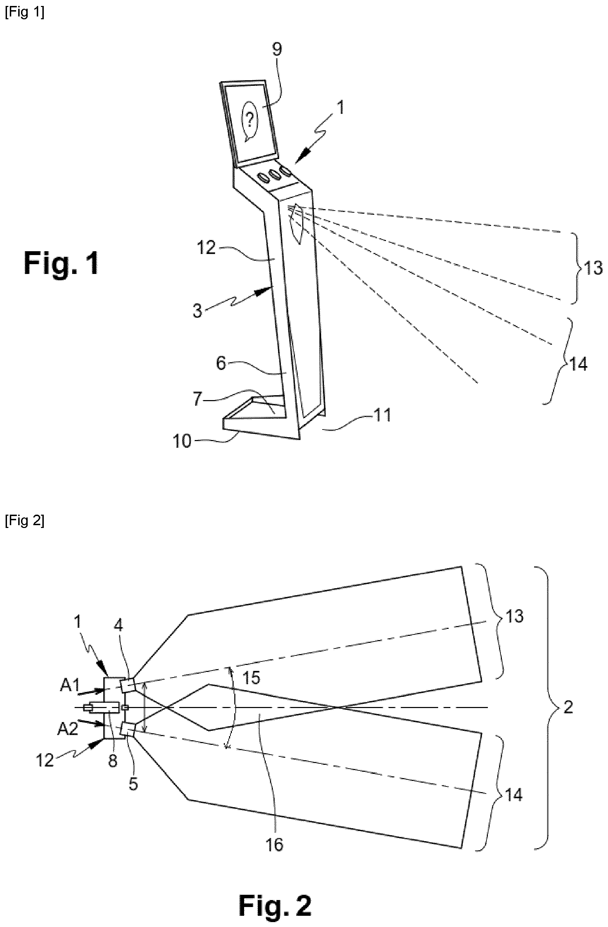

La figure 1 représente un système de comptage 1 configuré pour effectuer le comptage de personnes passant dans un périmètre de détection 2 du système de comptage 1 selon un mode de réalisation de l'invention.

Le système de comptage 1 comporte un boitier 3, un premier capteur à ultrason 4 et un deuxième capteur à ultrason 5, une unité de commande 6, un dispositif d'alimentation électrique 7, un détecteur de présence 8 ainsi qu'un dispositif de récolte d'information 9. Le système de comptage 1 est transportable par un utilisateur, c'est-à-dire qu'il peut être déplacé par l'utilisateur.

Le détecteur de présence 8 est prévue sur une face avant du système de comptage 1. Le détecteur de présence 8 est configuré pour faire saillie avec le système de comptage 1 afin de maximiser l'angle d'un faisceau de détection provenant du détecteur de présence 8. Avantageusement, le positionnement en saillie du détecteur de présence permet une détection à 180° du côté de la face avant du système de comptage, et sur une distance comprise entre 3 et 5 mètres.

Le boitier 3 comporte une partie de socle 10 qui est destinée à reposer sur une surface de sol 11, et une partie de comptage 12 qui est inclinée par rapport à la partie de socle 10. Les premier et deuxième capteurs à ultrason 4,5 sont prévus sur la partie de comptage 12 du boitier 3.

Les premier et deuxième capteurs à ultrason 4,5 définissent respectivement une première zone de détection 13 et une deuxième zone de détection 14. La somme de la première zone de détection 13 et de la deuxième zone de détection 14 définit le périmètre de détection 2 du système de comptage 1. Avantageusement, les premier et deuxième capteurs à ultrason 4,5 sont configurés pour détecter le passage d'un ou plusieurs personnes dans le périmètre de détection 2.

Selon le mode de réalisation tel que visible sur la figure 2, le premier capteur à ultrason 4 possède un premier axe de détection A1, et le deuxième capteur à ultrason 5 possède un deuxième axe de détection A2 qui est incliné par rapport au premier axe de détection A1. Les premier et deuxième axes de détection A1, A2 sont également sécants et coplanaires. Les premier et deuxième axes de détection A1, A2 s'étendent dans un plan de détection P. Les premier et deuxième axes de détection A1, A2 sont inclinés l'un par rapport à l'autre d'un angle d'inclinaison 15 compris entre 10° et 30°, et par exemple d'environ 20°. La première zone de détection 13 et la deuxième zone de détection 14 se superposent au moins en partie et définissent une zone de détection commune 16. La zone de détection commune 16 est prévue à une distance de la partie de comptage 12 qui est comprise entre 40cm et 60cm, et par exemple d'environ 50 cm, selon le plan de détection P.

Avantageusement, la disposition spécifique des premier et deuxièmes capteurs à ultrason 4, 5 permet de palier l'inconvénient de la lenteur de mesure des capteurs ultrasoniques. En effet, l'angle d'inclinaison 15 permet d'augmenter la dimension du périmètre de détection 2 par rapport à une configuration en parallèle des capteurs à ultrason, et ainsi augmente la probabilité de détecter le passage d'une personne dans le périmètre de détection 2.

En outre, la présence des premier et deuxième capteurs à ultrason 4,5 ainsi que leur disposition spécifique, permet de déterminer la direction de passage de la personne entrant et sortant du périmètre de détection 2, ceci grâce à la décomposition du périmètre de détection 2 en plusieurs zones de détection : première zone de détection 13, deuxième zone de détection 14, et la zone de détection commune 16.

Le plan de détection P est configuré pour être sensiblement horizontal lorsque le système de comptage 1 repose sur une surface de sol 11 qui est horizontale. De façon analogue, le plan de détection P est configuré pour être sensiblement parallèle à la surface de sol 11 lorsque la partie de socle 10 repose sur la surface de sol 11.

L'unité de commande 6 est configurée pour déterminer le nombre de personnes passant dans le périmètre de détection 2 en fonction des mesures relevées par les premier et deuxième capteurs à ultrason 4, 5, mais également pour détecter la direction de passage des personnes dans le périmètre de détection 2 en fonction des caractéristiques des mesures relevées par les premier et deuxième capteurs à ultrason 4, 5. L'unité de commande 6 est également configurée pour commander le dispositif de récolte d'information 9. Le dispositif de récolte d'information 9 est configuré pour attirer l'attention d'un individu passant à proximité du système de comptage 1, afin par exemple, de l'inviter à répondre à un sondage au moyen d'un dispositif d'interaction, puis de récolter et stocker les informations provenant du dispositif d'interaction.

Comme visible plus spécifiquement sur la figure 5, le premier capteur à ultrason 4 et le deuxième capteur à ultrason 5 comportent chacun une partie active 200, également appelée canon, laquelle est configurée pour être dirigée en direction respectivement du premier axe de détection A1 et du deuxième axe de détection A2. Le premier capteur à ultrason 4 et le deuxième capteur à ultrason 5 sont chacun insérés à l'intérieur d'un dispositif d'isolement 300 s'étendant sensiblement respectivement selon le premier axe de détection A1 et le deuxième axe de détection A2. Le premier capteur à ultrason 4 et le deuxième capteur à ultrason 5 comportent chacun une partie de support 400, laquelle est configurée pour solidariser le premier capteur à ultrason 4 et le deuxième capteur à ultrason 5 à l'intérieur des dispositifs d'isolement 300 respectifs, la partie de support 400 étant prévue à l'opposé de la partie active 200 respectivement selon le premier axe de détection A1 et le deuxième axe de détection A2.

Une telle configuration de l'invention permet avantageusement d'isoler la partie active 200 du premier capteur à ultrason 4 et du deuxième capteur à ultrason 5 des parties de support 400 respectives. Un espace vide est créé entre la partie active 200 et le dispositif d'isolement 300 ce qui permet avantageusement d'éviter les phénomènes de résonnance générés par le contact de la partie active 200 avec un élément extérieur.

Le système de comptage 1 comporte en outre un dispositif d'alimentation électrique 7, telle qu'une batterie par exemple. Le dispositif d'alimentation électrique 7 est avantageusement prévu dans la partie de socle 10 afin d'abaisser le centre de gravité du système de comptage 1 et de gagner en stabilité.

Selon le mode de réalisation de l'invention tel que visible sur la figure 1, le détecteur de présence 8 est configuré pour agir sur l'alimentation électrique 7 des premier et deuxième capteurs à ultrason 4, 5. Par conséquent et d'une façon avantageuse, les premier et deuxième capteurs à ultrason 4,5 ne sont actifs que lorsque le détecteur de présence 8 détecte la présence d'au moins une personne à l'intérieur ou à proximité du périmètre de détection 2.

Selon le mode de réalisation de l'invention tel que décrit sur les figures 1 à 5, les premier et deuxième capteurs à ultrason 4, 5 effectuent chacun sensiblement trois mesures par cycle de 50 ms, soit 60 mesures par seconde. Les cycles de mesure des premier et deuxième capteurs à ultrason sont réalisés successivement, c'est-à-dire l'un après l'autre, afin de ne pas se gêner mutuellement.

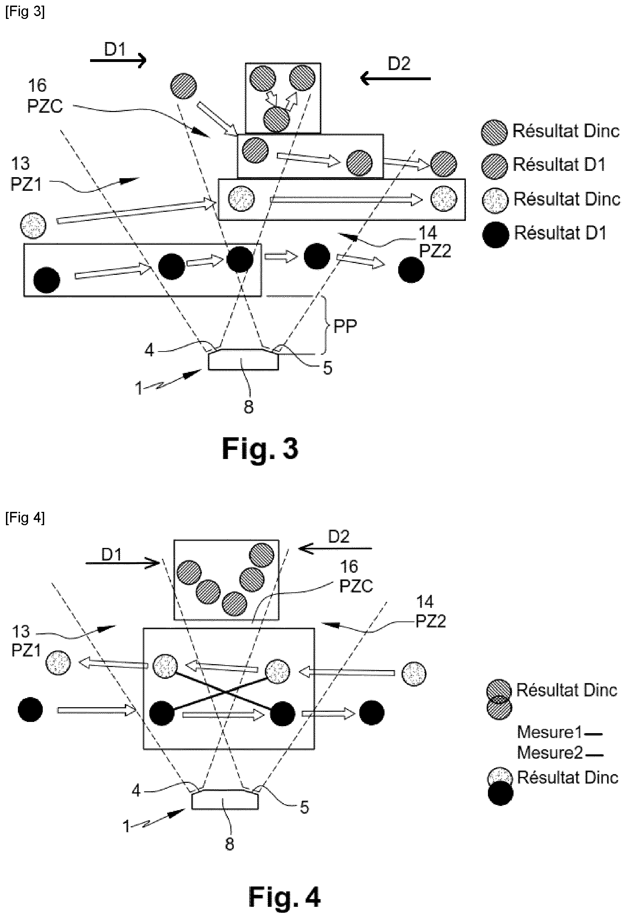

Les figures 3 et 4 décrivent les cas de figures éventuels rencontrés par le système de comptage 1 lors de son utilisation, ainsi que les résultats de l'analyse effectuée par l'unité de commande 6 lors du passage d'une ou de plusieurs personnes à l'intérieur du périmètre de détection 2. Chaque point d'une même nuance représente le passage d'une personne dans le périmètre de détection 2. L'espace entre deux points d'une même nuance correspond au déplacement d'une personne entre deux mesures réalisées par le premier capteur à ultrason 4 et/ou le deuxième capteur à ultrason 4.

Également, les figures 3 et 4 traduisent la mise en oeuvre d'un procédé de comptage et de détermination d'une direction de passage d'au moins une personne par le système de comptage 1 selon le mode de réalisation de l'invention.

La figure 5 décrit le procédé de comptage et de détermination d'une direction de passage utilisant un premier capteur à ultrason 4 et un deuxième capteur à ultrason 5 qui définissent un périmètre de détection 2. Les premier et deuxième capteurs à ultrason 4, 5 définissent respectivement une première zone de détection 13 et une deuxième zone de détection 14. Le procédé de comptage et de détermination d'une direction de passage comporte tout ou partie des étapes suivantes :
- mise en fonction des premier et deuxième capteurs à ultrason du procédé de comptage par activation du détecteur de présence 8 ;
- calibration M0 des premier et deuxième capteurs à ultrason 4, 5, la calibration consiste en la mesure de la distance maximale mesurée par chacun des premier et deuxièmes capteurs à ultrason 4, 5 ;
- première mesure E11 relevée par le premier capteur à ultrason 4 et première mesure E12 relevée par le deuxième capteur à ultrason 5, les premières mesures E11 ; E12 définissant un premier groupe de mesure M1,
- première détermination E1 d'une valeur d'un premier état de détection combiné St1 en fonction de la première mesure E11 relevée par le premier capteur à ultrason 4 et de la première mesure E12 relevée par le deuxième capteur à ultrason 5,
- deuxième mesure E21 relevée par le premier capteur à ultrason 4 et deuxième mesure E22 relevée par le deuxième capteur à ultrason 5, les deuxièmes mesures E21 ; E22 définissant un deuxième groupe de mesure M2,
- deuxième détermination E2 d'une valeur d'un deuxième état de détection combiné St2 en fonction de la deuxième mesure E21 relevée par le premier capteur à ultrason 4 et de la deuxième mesure E22 relevée par le deuxième capteur à ultrason 5,
   les valeurs prises par le premier état de détection combiné St1 ou par le deuxième état de détection combiné St2 étant comprises dans un ensemble de valeur d'état comprenant les valeurs suivantes :
   ∘ présence dans la première zone de détection PZ1 ;
   ∘ présence dans la deuxième zone de détection PZ2 ;
   ∘ présence dans une zone de détection commune PZC ;
   ∘ non présence NP ou aucune mesure notable ;
   ∘ présence proche PP,
- comptage et détermination de la direction d'une personne E3 dans lequel :
   ∘ une incrémentation d'un compteur de passage Ct est réalisée, et une direction de passage Dir est déterminée dans une première direction de passage D1 si le premier état de détection combiné St1 correspond à une présence dans la première zone de détection PZ1 et le deuxième état de détection combiné St2 correspond à une présence dans la deuxième zone de détection PZ2, ou
   ∘ une incrémentation d'un compteur de passage Ct est réalisée, et une direction de passage Dir est déterminée dans une deuxième direction de passage D2 si le premier état de détection combiné St1 correspond à une présence dans la deuxième zone de détection PZ2 et le deuxième état de détection combiné St2 correspond à une présence dans la première zone de détection PZ1, ou
   ∘ l'incrémentation du compteur de passage Ct est réalisée, et la détermination de la direction de passage Dir dans la première direction de passage D1 si le premier état de détection combiné St1 correspond à une présence dans la zone de détection commune PZC et le deuxième état de détection combiné St2 correspond à une présence dans la deuxième zone de détection PZ2, ou
   ∘ l'incrémentation du compteur de passage Ct est réalisée, et la détermination de la direction de passage Dir dans la première direction de passage D1 si le premier état de détection combiné St1 correspond à une présence dans la première zone de détection PZ1 et le deuxième état de détection combiné St2 correspond à une présence dans la zone de détection commune PZC, ou
   ∘ l'incrémentation du compteur de passage Ct est réalisée, et la détermination de la direction de passage Dir dans la deuxième direction de passage D2 si le premier état de détection combiné St1 correspond à une présence dans la zone de détection commune PZC et le deuxième état de détection combiné St2 correspond à une présence dans la première zone de détection PZ1, ou
   ∘ l'incrémentation du compteur de passage Ct est réalisée, et la détermination de la direction de passage Dir dans la deuxième direction de passage D2 si le premier état de détection combiné St1 correspond à une présence dans la deuxième zone de détection PZ2 et le deuxième état de détection combiné St2 correspond à une présence dans la zone de détection commune PZC, ou
   ∘ l'incrémentation du compteur de passage Ct est réalisée, et la détermination de la direction de passage Dir dans une direction de passage inconnue Dinc si le premier état de détection combiné St1 correspond à une présence dans la première zone de détection PZ1 et le deuxième état de détection combiné St2 correspond à une non-présence NP, ou
   ∘ - l'incrémentation du compteur de passage Ct est réalisée, et la détermination de la direction de passage Dir dans une direction de passage inconnue Dinc si le premier état de détection combiné St1 correspond à une présence dans la deuxième zone de détection PZ2 et le deuxième état de détection combiné St2 correspond à une non-présence NP, ou
   ∘ - l'incrémentation du compteur de passage Ct est réalisée, et la détermination de la direction de passage Dir dans une direction de passage inconnue Dinc si le premier état de détection combiné St1 correspond à une présence dans la zone de détection commune PZC et le deuxième état de détection combiné St2 correspond à une non-présence NP, ou
   ∘ - l'incrémentation du compteur de passage Ct est réalisée, et la détermination de la direction de passage Dir dans une direction de passage inconnue Dinc si le premier état de détection combiné St1 correspond à une présence proche PP ;
- temporisation E4 d'une durée d'une seconde après le comptage et la détermination de la direction de la personne afin que la personne puisse quitter le périmètre de détection,
- reprise de l'étape première mesure M1 de première mesure E11 relevée par le premier capteur à ultrason 4 et de la première mesure E12 relevée par le deuxième capteur à ultrason 5,
- première détermination E1 d'une valeur du premier état de détection combiné St1 en fonction de la première mesure E11 et de la première mesureE12 si les mesures E11, E12 relevées sont différentes des dernières mesures E21, E22 enregistrés.
- mise en veille du système de comptage si aucun des premier et deuxième capteurs à ultrason 4, 5 ne détecte de présence dans l'une quelconque des zones de détection 13, 14, 16 pendant une durée sensiblement comprise entre 20 secondes et 40 secondes.

Bien entendu, la présente invention n'est nullement limitée aux modes de réalisation décrits et illustrés qui n'ont étés donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Procédé de comptage et de détermination d'une direction de passage utilisant un premier capteur à ultrason (4) et un deuxième capteur à ultrason (5) définissant un périmètre de détection (2), les premier et deuxième capteurs à ultrason (4,5) définissant respectivement une première zone de détection (13) et une deuxième zone de détection (14), le procédé comprenant au moins les étapes suivantes :
- première mesure (E11) relevée par le premier capteur à ultrason (4) et première mesure (E12) relevée par le deuxième capteur à ultrason (5), les premières mesures (E11 ; E12) définissant un premier groupe de mesure (M1),
- première détermination (E1) d'une valeur d'un premier état de détection combiné (St1) en fonction de la première mesure (E11) relevée par le premier capteur à ultrason (4) et de la deuxième mesure (E12) relevée par le deuxième capteur à ultrason (5),
- deuxième mesure (E21) relevée par le premier capteur à ultrason (4) et deuxième mesure (E22) relevée par le deuxième capteur à ultrason (5), les deuxièmes mesures (E21 ; E22) définissant un deuxième groupe de mesure (M2),
- deuxième détermination (E2) d'une valeur d'un deuxième état de détection combiné (St2) en fonction de la deuxième mesure (E21) relevée par le premier capteur à ultrason (4) et de la deuxième mesure (E22) relevée par le deuxième capteur à ultrason (5), les valeurs prises par le premier état de détection combiné (St1) ou par le deuxième état de détection combiné (St2) étant comprises dans un ensemble de valeur d'état comprenant les valeurs suivantes :
∘ présence dans la première zone de détection (PZ1) ;
∘ présence dans la deuxième zone de détection (PZ2) ;
- comptage et détermination de la direction d'une personne (E3) dans lequel :
∘ une incrémentation d'un compteur de passage (Ct) est réalisée, et une direction de passage (Dir) est déterminée dans une première direction de passage (D1) si le premier état de détection combiné (St1) correspond à une présence dans la première zone de détection (PZ1) et le deuxième état de détection combiné (St2) correspond à une présence dans la deuxième zone de détection (PZ2), ou
∘ une incrémentation d'un compteur de passage (Ct) est réalisée, et une direction de passage (Dir) est déterminée dans une deuxième direction de passage (D2) si le premier état de détection combiné (St1) correspond à une présence dans la deuxième zone de détection (PZ2) et le deuxième état de détection combiné (St2) correspond à une présence dans la première zone de détection (PZ1).

2. Procédé de comptage et de détermination d'une direction de passage selon la revendication 1, dans lequel les mesures du deuxième groupe de mesures (M2) sont répétées pendant une durée déterminée, ou jusqu'à ce que le deuxième groupe de mesures (M2) aboutisse à une deuxième détermination (E2) qui soit différente de la première détermination (E1).

3. Procédé de comptage et de détermination d'une direction de passage selon la revendication 1 ou 2, dans lequel l'ensemble de valeurs d'état comprend en outre la valeur suivante :
∘ Présence dans une zone de détection commune (PZC) ;
et dans lequel l'étape de comptage et de détermination de la direction d'une personne comprend :
- l'incrémentation du compteur de passage (Ct), et la détermination de la direction de passage (Dir) dans la première direction de passage (D1) si le premier état de détection combiné (St1) correspond à une présence dans la zone de détection commune (PZC) et le deuxième état de détection combiné (St2) correspond à une présence dans la deuxième zone de détection (PZ2), ou
- l'incrémentation du compteur de passage (Ct), et la détermination de la direction de passage (Dir) dans la première direction de passage (D1) si le premier état de détection combiné (St1) correspond à une présence dans la première zone de détection (PZ1) et le deuxième état de détection combiné (St2) correspond à une présence dans la zone de détection commune (PZC), ou
- l'incrémentation du compteur de passage (Ct), et la détermination de la direction de passage (Dir) dans la deuxième direction de passage (D2) si le premier état de détection combiné (St1) correspond à une présence dans la zone de détection commune (PZC) et le deuxième état de détection combiné (St2) correspond à une présence dans la première zone de détection (PZ1), ou
- l'incrémentation du compteur de passage (Ct), et la détermination de la direction de passage (Dir) dans la deuxième direction de passage (D2) si le premier état de détection combiné (St1) correspond à une présence dans la deuxième zone de détection (PZ2) et le deuxième état de détection combiné (St2) correspond à une présence dans la zone de détection commune (PZC).

4. Procédé de comptage et de détermination d'une direction de passage selon la revendication 2, dans lequel l'ensemble de valeurs d'état comprend en outre les valeurs suivantes :
∘ non présence (NP) ou aucune mesure notable,
∘ présence proche (PP),
et dans lequel l'étape de comptage et de détermination de la direction d'une personne comprend :
- l'incrémentation du compteur de passage (Ct), et la détermination de la direction de passage (Dir) dans une direction de passage inconnue (Dinc) si le premier état de détection combiné (St1) correspond à une présence dans la première zone de détection (PZ1) et le deuxième état de détection combiné (St2) correspond à une non-présence (NP), ou
- l'incrémentation du compteur de passage (Ct), et la détermination de la direction de passage (Dir) dans une direction de passage inconnue (Dinc) si le premier état de détection combiné (St1) correspond à une présence dans la deuxième zone de détection (PZ2) et le deuxième état de détection combiné (St2) correspond à une non-présence (NP), ou
- l'incrémentation du compteur de passage (Ct), et la détermination de la direction de passage (Dir) dans une direction de passage inconnue (Dinc) si le premier état de détection combiné (St1) correspond à une présence dans la zone de détection commune (PZC) et le deuxième état de détection combiné (St2) correspond à une non-présence (NP), ou
- l'incrémentation du compteur de passage (Ct), et la détermination de la direction de passage (Dir) dans une direction de passage inconnue (Dinc) si le premier état de détection combiné (St1) correspond à une présence proche (PP).

5. Procédé de comptage et de détermination d'une direction de passage selon l'une quelconque des revendications précédentes, comprenant également les étapes suivantes, successivement à la fin de l'étape de comptage et de détermination de la direction d'une personne (E3) :
- temporisation (E4) d'une durée d'une seconde après le comptage et la détermination de la direction de la personne afin que la personne puisse quitter le périmètre de détection,
- reprise de l'étape de première mesure (E11) relevée par le premier capteur à ultrason (4) et de la première mesure (E12) relevée par le deuxième capteur à ultrason (5),
- première détermination (E1) d'une valeur du premier état de détection combiné (St1) en fonction de la première mesure (E11) et de la première mesure (E12) si les mesures (E11, E12) relevées sont différentes des dernières mesures (E21, E22) enregistrés.

6. Procédé de comptage et de détermination selon l'une quelconque des revendications, comprenant en outre l'étape suivante, préalablement à l'étape de première mesure (M1):
- mise en fonction des premier et deuxième capteurs à ultrason du procédé de comptage par activation d'un détecteur de présence (8),
- calibration quotidienne (M0) des premier et deuxième capteurs à ultrason (4, 5).

7. Procédé de comptage et de détermination d'une direction de passage selon la revendication précédente, la présence d'une personne dans l'une quelconque des zones de détection étant **caractérisée par** une distance mesurée par au moins l'un des premier et deuxième capteurs à ultrason (4, 5), ladite distance mesurée devant être au moins 10% inférieure à la distance maximale mesurée respectivement par les premier et deuxième capteurs à ultrason durant l'étape de calibration.

8. Système de comptage (1) configuré pour la mise en oeuvre du procédé de comptage et de détermination d'une direction de passage selon l'une quelconque des revendications précédentes, le système de comptage (1) comportant au moins :
- un premier capteur à ultrason (4) et un deuxième capteur à ultrason (5) définissant le périmètre de détection (2),
- une unité de commande (6) configurée pour déterminer le nombre de personnes passant dans le périmètre de détection (2) en fonction des mesures émises par les premier et deuxième capteurs à ultrason (4,5), et pour détecter le sens de passage des personnes dans le périmètre de détection (2),
le premier capteur à ultrason (4) possédant un premier axe de détection (A1), et le deuxième capteur à ultrason (5) possédant un deuxième axe de détection (A2) qui est incliné par rapport au premier axe de détection (A1).

9. Système de comptage (1) selon la revendication précédente, dans lequel les premier et deuxième axes de détection (A1, A2) sont coplanaires et s'étendent dans un plan de détection (P).

10. Système de comptage (1) selon la revendication précédente, dans lequel le plan de détection (P) est configuré pour être sensiblement horizontal lorsque le système de comptage (1) repose sur une surface de sol (11) qui est horizontale.

11. Système de comptage (1) selon l'une des revendications 8 à 10, dans lequel les premier et deuxième axes de détection (A1, A2) sont inclinés l'un par rapport à l'autre d'un angle d'inclinaison (15) compris entre 15 et 25°, et par exemple d'environ 20°.

12. Système de comptage (1) selon l'une des revendications 8 à 11, dans lequel les premier et deuxième capteurs à ultrason (4, 5) sont espacés l'un par rapport à l'autre d'une distance comprise entre 4 et 12 cm, et par exemple d'environ 8 cm.

13. Système de comptage (1) selon l'une quelconque des revendications 8 à 12, dans lequel la première zone de détection (13) et la deuxième zone de détection (14) se superposent au moins en partie et définissent une zone de détection commune (16).

14. Système de comptage (1) selon l'une quelconque des revendications 8 à 13, dans lequel le premier capteur à ultrason (4) et le deuxième capteur à ultrason (5) comportent chacun une partie active (200) configurée pour être dirigée respectivement en direction du premier axe de détection (A1) et du deuxième axe de détection (A2), et dans lequel le premier capteur à ultrason (4) et le deuxième capteur à ultrason (5) sont chacun insérés à l'intérieur d'un dispositif d'isolement (300) s'étendant sensiblement respectivement selon le premier axe de détection (A1) et le deuxième axe de détection (A2), la partie active (200) étant espacé du dispositif d'isolement (300).

15. Système de comptage (1) selon la revendication précédente, dans lequel le premier capteur à ultrason (4) et le deuxième capteur à ultrason (5) comportent chacun une partie de support (400), laquelle est configurée pour solidariser le premier capteur à ultrason (4) et le deuxième capteur à ultrason (5) à l'intérieur des dispositifs d'isolement (300) respectifs, la partie de support (400) étant prévue à l'opposé de la partie active (200) respectivement selon le premier axe de détection (A1) et le deuxième axe de détection (A2).
